# EUROPÄISCHE PATENTSCHRIFT

(11) **EP 1 223 082 B1**
(45) Veröffentlichungstag und Bekanntmachung des Hinweises auf die Patenterteilung: **28.06.2006**
(21) Anmeldenummer: 02000374.5
(22) Anmeldetag: 05.01.2002
(51) Int. Cl.: B60R 13/02

(54) **Fahrzeugdach, inbesondere Kraftfahrzeugdachmodul**
Vehicle roof, in particular automobile roof module
Toit pour véhicule, module constituant un pavillon d'automobile en particulier

(30) Priorität: 15.01.2001 DE 10101450
(43) Veröffentlichungstag der Anmeldung: 17.07.2002
(73) Patentinhaber: ArvinMeritor GmbH, 63128 Dietzenbach (DE)
(72) Erfinder: Grimm, Rainer, Dipl.-Ing., 60599 Frankfurt (DE)
(74) Vertreter: Oppermann, Ewald

(56) Entgegenhaltungen:
- EP-A- 0 240 758
- DE-A1- 2 845 708
- DE-A1- 3 202 594
- DE-A1- 19 709 016

## Beschreibung

Die Erfindung bezieht sich auf ein Fahrzeugdach, insbesondere Kraftfahrzeugdach, entsprechend dem Oberbegriff des Patentanspruchs 1.

Derartige modulartig einbaufertig vorgefertigte Fahrzeugdächer werden getrennt von der Fahrzeugkarosserie fertiggestellt und erst am Montageband in der Automobilfabrik mit der Fahrzeugkarosserie vereinigt. Insbesondere wegen der erheblichen Verkürzung der Montagezeit am Montageband erfreuen sich solche Fahrzeugdachmodule zunehmender Bedeutung. Diese vorgefertigten Fahrzeugdächer können bereits mit weiteren vormontierten Fahrzeugkomponenten, wie integrierten schon voll funktionsfähigen Schiebedacheinheiten, Sonnenblenden, Haltegriffen, Lüftungsgittern, Innenleuchten, stoßabsorbierenden Sicherheitselementen, Airbags u.dgl. ausgerüstet sein.

Bei einem bekannten gattungsgemäßen Fahrzeugdach (DE 197 09 016 A1) der im Oberbegriff des Anspruchs 1 angegebenen Ausbildung, ist die Innenschale im Bereich der zur Auflage auf den Karosserierahmen vorgesehenen Außenränder des Fahrzeugdachs in zwei Schichten aufgeteilt, von denen die obere Schicht auf den Karosserierahmen auflegbar ist, während die untere Schicht zur Verkleidung des Karosserierahmens nach unten umbiegbar ausgebildet ist. Mit Ausnahme einer Schiebedacheinheit sind hierbei alle vormontierten Fahrzeugkomponenten an dafür geeigneten Orten an der nach unten umbiegbaren unteren Schicht der Innenschale angebracht. Die im Oberbegriff des Anspruchs 1 erwähnten Hohlräume an der Innenschale werden hierbei durch die untere Schicht der Innenschale begrenzt. Dementsprechend befinden sich hierbei die im Oberbegriff des Anspruchs 1 erwähnten Gitter in der unteren zur Verkleidung des Karosserierahmens umbiegbaren Schicht.

Gemäß einem nicht vorveröffentlichten Vorschlag (DE Patentanmeldung 199 51 659.6) sind dort als Funktionselemente bezeichnete Fahrzeugkomponenten auch im Bereich der nicht in zwei Schichten aufgeteilten Innenschale in von der Dachhimmelfläche ausgehend in den Schaumkunststoff eingeformte Vertiefungen lösbar eingesetzt. Die von derartigen Vertiefungen gebildeten Hohlräume können als Teil eines Luftkanalsystems ausgebildet sein und durch Lüftungsgitter abgedeckt werden.

Entsprechend einem weiteren nicht vorveröffentlichten Vorschlag (DE Patentanmeldung 199 47 238.6) besteht das Fahrzeugdach aus einer starren Dachhaut mit einer einschichtig daran angeschäumten Innenschale und einem als getrenntes Teil aus Schaumkunststoff vorgeformten Dachhimmel. Dachhaut mit angeschäumter Innenschale ist hierbei nach der Sprachregelung der eingangs angegebenen Gattung die Außenschale, während der getrennt vorgeformte Dachhimmel dementsprechend die Innenschale ist. Der Dachhimmel ist mit der Dachhaut/Innenschale lösbar und austauschbar verrastet. Auch bei diesem Fahrzeugdachmodul sind an dem Dachhimmel, nämlich zwischen dem Dachhimmel und dem Verbund aus Dachhaut und angeschäumter Innenschale, Hohlräume gebildet, so daß die vorliegende nachfolgend näher erläuterte Erfindung auf diese Dachmodulbauart gleichermaßen anwendbar ist.

Soweit bei diesen unterschiedlich ausgebildeten Fahrzeugdächern Gitter in der Dachhimmelfläche vorgesehen sind, welche Hohlräume mit dem Fahrzeuginnenraum verbinden, sind diese Gitter als getrennte Teile ausgebildet und werden bei der Vormontage des Dachmoduls in entsprechende Öffnungen in der Dachhimmelfläche eingesetzt. Dabei ist es schwierig, die Gitter in Farbe und Struktur so auszubilden, daß sie in der Dachhimmelfläche nicht störend in Erscheinung treten.

Der Erfindung liegt die Aufgabe zugrunde, modulartig vorgefertigte Fahrzeugdächer der eingangs angegebenen Gattung hinsichtlich der Gestaltung und Anbringung von Gittern in der Dachhimmelfläche in der Herstellung zu vereinfachen und insgesamt unauffällig auszubilden.

Diese Aufgabe wird erfindungsgemäß durch die Merkmale des Anspruchs 1 gelöst. Vorteilhafte Weiterbildungen gehen aus den Unteransprüchen hervor und sind nachfolgend ebenfalls beschrieben.

Erfindungsgemäß sind die Gitter wie im Anspruch 1 angegeben aus dem Schaumkunststoffmaterial der Innenschale selbst und damit einteilig mit voneinander beabstandeten Durchtrittsöffnungen geformt. Die Gitter werden daher bereits bei der Formung der Innenschale aus Schaumkunststoff auf einfache Weise einteilig mit der Innenschale geformt, so daß die getrennte Herstellung und Anbringung von Gittern am Fahrzeugdach entfällt. Diese in die Innenschale integrierten Gitter sind verhältnismäßig unauffällig und stören nicht das homogene Erscheinungsbild der dem Fahrzeuginnenraum zugewandten Dachhimmelfläche. Die Gitter können sowohl an Hohlräumen zur Luftzuführung und/oder -abführung vorgesehen sein als auch zur partiellen Abdeckung von Innenleuchten, die hinter den Gittern in von den Gittern verschlossenen Hohlräumen angebracht sind. Im letzteren Fall ist eine Zugänglichkeit der Innenleuchten vorzugsweise außerhalb der Gitter vorzusehen, damit ggf. die Glühlampen ausgewechselt werden können.

Die Durchtrittsöffnungen können jede geeignete geometrische Querschnittsform erhalten, vorzugsweise sind sie jedoch gemäß Anspruch 2 schlitzartig ausgebildet und sind durch aus dem Schaumkunststoffmaterial der Innenschale geformte lamellenartige Rippen begrenzt. Wird in dem von diesem Gitter geschlossenen Hohlraum eine Leuchte angebracht, läßt sich eine vorteilhafte blendfreie und indirekte Innenraumbeleuchtung erzielen, bei welcher die lamellenartigen Rippen den Lichtausfall aus dem Hohlraum im gewünschten Sinn beeinflussen. Wird dieses Gitter als Belüftungselement eingesetzt, ermöglichen die lamellenartigen Rippen je nach ihrer bei der Formung vorgegebenen Ausrichtung gerichtete Luftströme.

Zur Bildung der Durchtrittsöffnungen bei der Schäumformung der Innenschale werden zweckmäßig wie im Anspruch 3 angegeben die Durchtrittsöffnungen zunächst nur vorgeformt, d.h. ohne Wanddurchbruch unter Bildung dünner Wandbereiche an den Stellen der Durchtrittsöffnungen vorgesehen. Die Durchtrittsöffnungen sind dann nachträglich auszuschneiden. Auf diese Weise kann Himmelbezugsmaterial auch in die vorgeformten Vertiefungen an den Stellen der Durchtrittsöffnungen faltenfrei eingebracht werden, welches dann bei Ausschneiden der dünnen Wandbereiche partiell mitausgeschnitten wird. Auf diese Weise erstreckt sich das Himmelbezugsmaterial wie im Anspruch 4 angegeben ausgehend von der Sichtfläche der Innenschale in die Durchtrittsöffnungen hinein, so daß die die Durchtrittsöffnungen begrenzenden lamellenartigen Rippen ebenfalls weitgehend mit dem Himmelbezugsmaterial beschichtet sind. Die Sichtfläche des Dachhimmels erscheint daher auch an den Stellen der Gitter unauffällig und homogen im Vergleich mit nachträglich eingesetzten zunächst getrennt hergestellten Gitterstrukturen.

Die Erfindung wird nachfolgend anhand eines in den beigefügten Zeichnungen zum Teil schematisch dargestellten Ausführungsbeispiels, welches ein Fahrzeugdachmodul betrifft, bei dem die Innenschale im Bereich der zur Auflage auf einen Karosserierahmen vorgesehenen Außenränder wie vorstehend angegeben in zwei Schichten aufgeteilt ist, näher beschrieben. Darin zeigt:
- Fig. 1: eine Perspektivansicht eines Fahrzeugdachs
- Fig. 2: den abgebrochenen Schnitt durch das Fahrzeugdach und durch einen Karosserierahmen entsprechend der Linie II-II in Fig. 1 und
- Fig. 3: die im Ausschnittskreis III in Fig. 2 gezeigte Einzelheit in einer Zwischenphase der Gitterherstellung.

Die Innenschale 1 des Dachmoduls ist aus einem Schaumkunststoff gebildet, der auf eine starre Dachhaut 2 aufgeschäumt ist. Die starre Dachhaut 2 besteht aus einem tiefgezogenen Metallblech, beispielsweise Aluminiumblech, oder kann aus einer vakuumverformten Kunststoffolie gebildet sein. Die Erfindung ist aber auch bei Dachmodulausführungsformen anwendbar, bei denen keine feste Dachhaut vorgesehen ist. Hierbei besteht das Dachmodul im wesentlichen aus einem harten schalenförmig und eigensteif geformten Schaumkunststoff mit glatter lackierter Außenfläche.

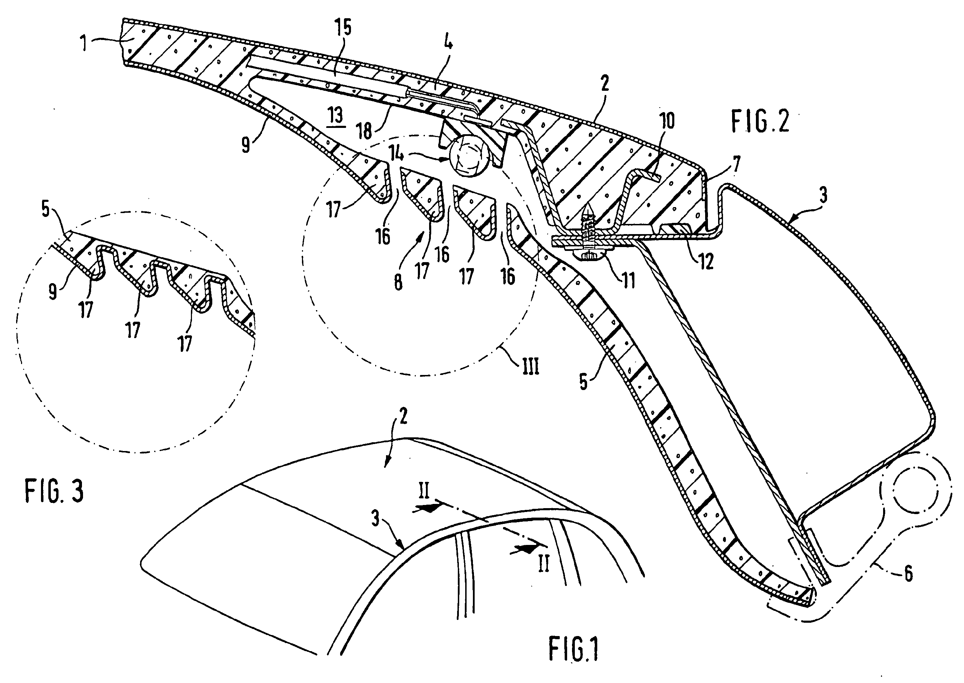

Die Innenschale 1 ist im Bereich der zur Auflage auf den Karosserierahmen 3 vorgesehenen Außenränder, von denen nur ein Außenrand dargestellt ist, in zwei Schichten aufgeteilt, von denen die obere Schicht 4 auf den Karosserierahmen 3 aufgelegt ist, während die untere Schicht 5 über die Außenränder des Fahrzeugdachs übersteht und für den Durchtritt durch die von dem Karosserierahmen 3 begrenzte Karosserieöffnung nach unten ohne bleibende Deformationen umbiegbar ist. Die untere Schicht 5 ist zur Anlage an den Karosserierahmen 3 und zur Befestigung daran, beispielsweise über an den Karosserierahmen anzuschraubende Funktionselemente (nicht dargestellt), ausgebildet. Die Verbindung zwischen der unteren Schicht 5 und dem Karosserierahmen 3 kann ein in Fig. 2 in strichpunktierten Linien schematisch dargestellter Verbindungskeder 6 übernehmen, der zugleich einen Hohlkammerabschnitt zur Abdichtung der benachbarten Fahrzeugtür (nicht dargestellt) gegenüber dem Karosserierahmen 3 aufweisen kann.

Geeignete Werkstoffe für die Innenschale 1 sind Hartschaumkunststoffe auf PUR-Basis, die durch den Kunststoff vor dem Aufschäumen einverleibte Faserstoffe, beispielsweise Glasfaserabschnitte, armiert sein können. Aber auch in die Schäumform eingelegte Gewebe, Gewirke, Vliese u.dgl. sind als Armierung geeignet. Durch das Aufschäumen der armierten Innenschale 1, deren obere Schicht 4 bis zu einer Randabkantung 7 der Dachhaut 2 reicht, entsteht ein sandwichartiges Verbunddachmodul hoher Formbeständigkeit und Festigkeit. Alle Innenkonturen der Innenschale 1 einschließlich der unteren Schicht 5 und des noch zu beschreibenden Gitters 8 werden durch entsprechende Formgebung der Schäumform (nicht dargestellt) gebildet.

Die Innenfläche der Innenschale 1 kann zur Ausbildung eines Dachhimmels mit einem textilen oder folienartigen Bezugsmaterial 9 beschichtet sein. Am Rand der oberen Schicht 5 kann ein Verstärkungsteil 10 in Form eines durchgehenden Profils in den Schaumstoff eingebettet sein. Im gezeichneten Beispiel ist das Verstärkungsteil 10 nicht vollständig in den verdickten Randbereich der oberen Schicht 4 eingebettet, sondern liegt mit seiner Unterfläche frei, so daß das Verstärkungsteil 10 unmittelbar dem Karosserierahmen 3 anliegt und über Schrauben 11 damit fest, aber lösbar verbunden ist. Die Schrauben 11 sind nach Lösen der unteren Schicht 5 von dem Verbindungskeder 6 von unten her für den Werkzeugangriff zugänglich. Im Bereich der Auflage des verdickten Randbereichs der oberen Schicht 4 ist eine umlaufend eingeformte Aufnahmenut vorgesehen, in welcher eine das Dachmodul gegenüber dem Karosserierahmen 3 abdichtende und daran zusätzlich befestigende Kleberraupe 12 Aufnahme findet.

Wie aus Fig. 2 hervorgeht, ist die Innenschale 1 im Bereich ihrer Aufteilung in zwei Schichten 4 und 5 so geformt, daß zwischen den beiden Schichten ein permanenter Hohlraum 13 gebildet ist. Im gezeichneten Beispiel ist innerhalb dieses Hohlraums 13 mindestens eine Leuchte 14 angeordnet, deren Sockel an der oberen Schicht 4 beispielsweise durch Anschäumen befestigt ist. Die Leuchte 14 ist über eine eingeschäumte abgebrochen dargestellte elektrische Leitung 15 an das Bordnetz des Kraftfahrzeugs angeschlossen und kann mittels eines an geeigneter Stelle angebrachten Schalters (nicht gezeigt) ein- und ausgeschaltet werden.

Der Hohlraum 13 steht mit dem Fahrzeuginnenraum über das Gitter 8 in Verbindung. Das aus dem Schaumkunststoffmaterial der Innenschale 1 selbst und damit einteilig geformte Gitter 8 besitzt im gezeichneten Beispiel drei voneinander beabstandete Durchtrittsöffnungen 16, die in ihrer Längenerstreckung senkrecht zur Zeichenebene als Schlitze ausgebildet sind. Die Schlitze sind selbstverständlich nicht über eine größere Länge durchgehend ausgeführt, weil dadurch die Formfestigkeit der unteren Schicht 5 der Innenschale 1 beeinträchtigt sein könnte. Es können auch mehrere Gitter 8 mit unterbrochenen schlitzförmigen Durchtrittsöffnungen 16 hintereinander angeordnet sein. Wie Fig. 2 auch verdeutlicht, sind die schlitzförmigen Durchtrittsöffnungen 16 jeweils zu beiden Seiten durch aus dem Schaumkunststoffmaterial der Innenschale 1 geformte lamellenartige Rippen 17 seitlich begrenzt.

Wie aus Fig. 3 hervorgeht, sind die schlitzartig ausgebildeten Durchtrittsöffnungen 16 zunächst nur entsprechende Vertiefungen, die in die Unterseite der unteren Schicht 5 der Innenschale 1 zweckmäßig bei deren Schäumformung eingeformt werden. Dabei wird die Wanddicke der unteren Schicht 5 an den tiefsten Stellen der Vertiefungen erheblich verringert, ohne daß schon Durchbrüche entstehen. Beim Einformvorgang wird das Bezugsmaterial 9 ebenfalls so verformt, daß die Vertiefungen damit ausgekleidet sind. Anschließend werden die verbliebenen dünnen Vertiefungswandungen zur Bildung der Durchbrüche dem Verlauf der die Vertiefungen begrenzenden Wandflächen folgend ausgeschnitten, beispielsweise durch Ausstanzen, wobei die in Fig. 2 gezeigte Konfiguration entsteht. Hierbei erstreckt sich das Bezugsmaterial 9 in die Durchtrittsöffnungen 16 hinein, so daß diese unauffällig und farblich mit der Himmelumgebung übereinstimmend in die Himmelfläche integriert sind. Die Rippen 17 sind bezüglich ihrer die Durchtrittsöffnungen 16 begrenzenden Wandungen so ausgerichtet, daß einerseits die gewünschte Richtung des Lichtausfalls und/oder der Luftströmung erhalten wird und andererseits eine Entformung nach der Schäumformung der Innenschale 1 möglich ist.

Die den Hohlraum 13 oben begrenzende Fläche der oberen Schicht 4 kann bei Verwendung des Gitters 8 als Lichtdurchtritt mit einer lichtreflektierenden Beschichtung als Reflexionsfläche 18 ausgebildet sein. Im Ergebnis ermöglicht das Gitter 8 eine blendungsfreie indirekte Beleuchtung des Fahrzeuginnenraums bzw. der gewünschten Beleuchtungszonen des Fahrzeuginnenraums. Das Gitter 8 kann aber zusätzlich zu der beschriebenen Beleuchtungsfunktion oder auch ausschließlich Teil eines Be- und Entlüftungssystems für den Fahrzeuginnenraum sein.

Vorgeschlagen wird ein sandwichartig aufgebautes Fahrzeugdachmodul mit einer daran angebrachten, aus einem formstabilen Schaumkunststoff geformten Innenschale, das in die Innenschale integrierte und aus deren Schaumkunststoff gebildete Gitter für den Lichtaustritt und/oder den Luftdurchtritt besitzt. Die Gitter sind daher keine getrennt herzustellenden und in die Innenschale einzubauenden Teile, sondern unauffälliger Bestandteil der Innenschale selbst, und ermöglichen eine blendungsfreie indirekte Beleuchtung des Fahrzeuginnenraums und/oder den Durchtritt gerichteter Luftströme für ein Be- und Entlüftungssystem für den Fahrzeuginnenraum.

### Bezugszeichenliste

- 1: Innenschale
- 2: Dachhaut
- 3: Karosserierahmen
- 4: obere Schicht
- 5: untere Schicht
- 6: Verbindungskeder
- 7: Randabkantung
- 8: Gitter
- 9: Bezugsmaterial
- 10: Verstärkungsteil
- 11: Schrauben
- 12: Kleberraupe
- 13: Hohlraum
- 14: Leuchte
- 15: elektrische Leitung
- 16: Durchtrittsöffnungen
- 17: Rippen
- 18: Reflexionsfläche

## Patentansprüche

1. Fahrzeugdach, insbesondere Kraftfahrzeugdach, das sandwichartig aus einer Außenschale und einer damit verbundenen als Dachhimmel aus Schaumkunststoff geformten Innenschale (1) aufgebaut, getrennt von der Fahrzeugkarosserie hergestellt, mit seinen Außenrändern auf einen Karosserierahmen (3) auflegbar und mit diesem fest verbindbar ist, wobei an der Innenschale (1) Hohlräume (13) vorgesehen sind, die über Gitter (8) mit dem Fahrzeuginnenraum in Verbindung stehen, **dadurch gekennzeichnet, daß** die Gitter (8) aus dem Schaumkunststoffmaterial der Innenschale (1) selbst und damit einteilig mit voneinander beabstandeten Durchtrittsöffnungen (16) geformt sind.

2. Fahrzeugdach nach Anspruch 1, **dadurch gekennzeichnet, daß** die Durchtrittsöffnungen (16) schlitzartig ausgebildet und durch aus dem Schaumkunststoffmaterial der Innenschale (1) geformten lamellenartigen Rippen (17) begrenzt sind.

3. Fahrzeugdach nach Anspruch 1 oder 2, **dadurch gekennzeichnet, daß** die Durchtrittsöffnungen (16) in die Unterseite der Innenschale (1) zunächst ohne Durchbruch eingeformt und nachträglich ausgeschnitten sind.

4. Fahrzeugdach nach einem der Ansprüche 1 bis 3, **dadurch gekennzeichnet, daß** die Sichtfläche der Innenschale (1) mit einem Himmelbezugsmaterial (9) beschichtet ist, welches sich auch in die Durchtrittsöffnungen (16) hineinerstreckt.

## Claims

1. Vehicle roof, in particular motor vehicle roof, which is constructed sandwich-like from an outer shell and an inner shell (1) connected to this formed as a headlining from foam plastic, and produced separately from the vehicle body, which can rest with its outer edges on a bodywork frame (3) and be firmly connected to this, wherein on the inner shell (1) are provided cavities (13) connected to the vehicle interior via grilles (8), **characterized in that** the grilles (8) are formed from the foam plastic material of the inner shell (1) itself and are of one piece with it having passage openings (16) arranged at intervals from each other.

2. Vehicle roof according to claim 1, **characterized in that** the passage openings (16) are formed slot-like and limited by lamellar ribs (17) formed from the foam plastic material of the inner shell (1).

3. Vehicle roof according to claim 1 or 2, **characterized in that** the passage openings (16) are formed in the underside of the inner shell (1) at first without breakthrough and subsequently cut out.

4. Vehicle roof according to one of the claims 1 to 3, **characterized in that** the visible surface of the inner shell (1) is covered with a headlining cover material (9) which also extends into the passage openings (16).

## Revendications

1. Toit de véhicule, en particulier toit de véhicule automobile, qui est réalisé séparément de la carrosserie du véhicule et conçu en sandwich d'une coque extérieure et d'une coque intérieure (1) reliée à celle-ci, formée en mousse de matière plastique et constituant un ciel de toit, qui peut être mis en appui par ses bords extérieurs sur un cadre de carrosserie (3) et qui peut être relié de manière solidaire à celui-ci, dans lequel sur la coque intérieure (1) sont prévues des cavités (13) qui sont en liaison avec l'habitacle du véhicule via des grilles (8), **caractérisé en ce que** les grilles (8) sont formées dans le matériau en mousse de matière plastique de la coque intérieure (1) elle-même et par conséquent d'une seule pièce avec des ouvertures de passage (16) espacées les unes des autres.

2. Toit de véhicule selon la revendication 1, **caractérisé en ce que** les ouvertures de passage (16) sont réalisées en forme de fentes et sont limitées par des nervures (17) en forme de lamelles formées dans le matériau en mousse de matière plastique de la coque intérieure (1).

3. Toit de véhicule selon la revendication 1 ou 2, **caractérisé en ce que** les ouvertures de passage (16) sont conformées dans la face inférieure de la coque intérieure (1) tout d'abord sans être percées et sont ultérieurement découpées.

4. Toit de véhicule selon l'une des revendications 1 à 3, **caractérisé en ce que** la surface visible de la coque intérieure (1) est revêtue d'un matériau de revêtement de ciel (9) qui s'étend aussi dans les ouvertures de passage (16).
